# EUROPEAN PATENT SPECIFICATION

(11) **EP 1 363 042 B1**
(45) Date of publication and mention of the grant of the patent: **27.10.2004**
(21) Application number: 01905836.1
(22) Date of filing: 23.02.2001
(51) Int. Cl.: F16F 9/44

(54) **ADJUSTABLE SHOCK ABSORBER**
VERSTELLBARER STOSSDÄMPFER
AMORTISSEUR REGLABLE

(43) Date of publication of application: 19.11.2003
(73) Proprietor: QUINTON HAZELL ESPANA, S.A., 01400 Areta-Llodio (Alava) (ES)
(72) Inventor: GASTON ZARAZAGA, Manuel, E-48630 Gorliz (ES)
(74) Representative: Carpintero Lopez, Francisco
(86) International application number: PCT/ES2001/000068
(87) International publication number: WO 2002/066858

(56) References cited:
- EP-A- 0 297 194
- EP-A- 0 937 908
- DE-A- 2 757 711
- GB-A- 2 310 702
- US-A- 4 476 967

## Description

### OBJECT OF THE INVENTION

The present invention relates to an adjustable shock absorber, preferably applicable in vehicles and meant to allow the user to manually adjust the stiffness of the shock absorber simply by acting on an externally accessible control, and thus without requiring tools or special skills nor having to disassemble the shock absorber, thereby allowing multiple settings of the shock absorber stiffness in a simple and fast manner without acting on its delicate elements nor affecting its operability.

### BACKGROUND OF THE INVENTION

Currently known are variable rate shock absorbers that can automatically adjust their stiffness to adapt to road conditions and/or different driving styles.

Generally speaking, said variable rate shock absorbers include an electromagnetic valve that allows controlling the flow of oil between two cylinder chambers, so that activation or deactivation of said electromagnetic valve changes the working conditions of the shock absorber and thereby its stiffness, with said valves being controlled electrically and automatically such that the most suitable stiffness is obtained at each time in view of the driving conditions.

A shock absorber of the above-described type is described in European Patent 0297194.

There also exist adjustable shock absorbers that allow a manual adjustment of the stiffness, but which require considerable mechanical skills as the shock absorber must be disassembled, and also require suitable tools and specific skills for calibrating as the adjustment is performed by acting on a shock absorber piston to open or close auxiliary orifices made in the piston for such purpose, in order to allow a greater oil flow between the compression and expansion chambers of the shock absorber. Thus, the operation performed on the shock absorber piston is a delicate one that must be performed with great care and skill to avoid damaging the shock absorber.

Returning to the variable rate shock absorber described in European Patent 0297194, it is of the type comprising an outer cylindrical shell that by suitable support means is attached to one of the wheels of the vehicle, said shell housing inside it a cylinder in which slides coaxially a stem connected on one of its ends to an mounting bolt which will be attached to the vehicle body. while on the other end it has a piston with two chambers defined inside it. These chambers are filled with oil and are commonly referred to as the compression and expansion chambers. Said piston is provided with a number of orifices to allow the oil to pass between said chambers.

The internal cylinder is closed on one end by a bi-directional pressure-relief valve that communicates the compression chamber and an annular reservoir or compensation chamber formed between the internal cylinder and the outer shell. Said compression chamber is meant to compensate the changes of the compression chamber volume during the operation of the shock absorber.

With this basic shock absorber structure, when the wheel associated to it encounters a bump the motion transmitted to the shock absorber components reduces the volume of the compression chamber and increases the volume of the expansion chamber, making oil flow from the compression chamber to the expansion chamber, and in turn to the compensation chamber.

When the vehicle wheel encounters a hole the opposite motions and effects occur.

With the aforementioned characteristics and in order to deal with changing road conditions or different driving styles, these shock absorbers have means to allow changing their stiffness. These means generally consist of a solenoid valve that allows venting the expansion chamber in order to proportionally change the shock absorber stiffness.

Specifically, in variable rate shock absorbers such as the one described in European Patent 0297194, the stem is hollow and internally houses a cylindrical element attached to the stem, inside which may slide a second cylinder attached to the pressure-relief valve, with the stem wall having an opening that establishes constant fluid communication of the expansion chamber with a volume, also referred to as the regulation chamber, defined between the stem and the cylinder attached inside it, with the regulation chamber being communicated with an outlet chamber defined inside the two internal telescoping cylinders in order to allow venting the expansion chamber to the compensation chamber through the regulation and outlet chambers.

The electrically actuated solenoid valve is placed in the orifice communicating the regulation chamber and the outlet chamber, so that it can control the fluid flow between said chambers.

### DESCRIPTION OF THE INVENTION

The invention is defined by an adjustable shock absorber according to claim 1.

The shock absorber disclosed is based on a structure similar to that described in the previous section, but it is provided with manual adjustment means that allow users to adjust the stiffness of the shock absorber themselves at will, without having to disassemble it nor requiring any special tools or skills, all of this such that the manual adjustment means allow to set multiple shock absorber settings quickly and easily, as the adjustment is effected by operating on a simple nut or external control placed on the outside of the shock absorber and which is easily accessible.

More specifically, the adjustable shock absorber of the invention is such that, being based on a similar construction to the variable rate shock absorbers described in the previous section, it includes a mechanically adjustable valve that is controlled manually and that is mounted entirely inside a sliding cylindrical tubular shaft or outer column which is concentrically placed inside the cylindrical body of the shock absorber, and with said valve consisting of a threaded stem with its outer end ending at the adjustment nut or external control easily accessible by the user in the assembled position of the shock absorber, while its inner end is attached to an upper piston that can move upwards and downwards against the action of a spring placed between said piston and a bushing inside which the said piston is housed; this bushing is placed inside the outer cylindrical column, specifically in an emerging segment of the outer column.

The bottom end of the sliding piston of the mechanically adjustable valve is placed over the top orifice of an outlet chamber, so that depending on its position it will seal to a greater or lesser extent a passage defined between a regulation chamber and said outlet chamber, thereby allowing a greater or lesser flow between an expansion chamber and a compensation chamber in order to control the shock absorber stiffness.

The aforementioned valve assembly is complemented by a regulator placed above the bushing and attached to the stem by a screw, with said regulator being comprised of a cylindrical body with its support base on the bushing and with a number of recesses, on any of which may rest a sphere that is constantly pushed towards the base of said regulator by a spring housed in a cup inside a blind orifice provided for such purpose at the top part of the bushing, such that turning the external nut or control results in a rotation of the stem and this rising or lowering of the piston, with a simultaneous rotation of the regulator so that the sphere can occupy one or another recess and thus fix the vertical position of the piston and with it the regulation position obtained for the shock absorber. In order to set a different regulation position it is necessary to act on the regulator with sufficient force to overcome the opposition of the spring, until the sphere locks in the following recess of the regulator.

Obviously, the aforementioned elements are provided with tight sealing means to prevent fluid leaks.

Thus, with the described construction and specifically by means of the new mechanical valve disclosed, the adjustment or regulation of the shock absorber is very simple and can be performed manually without requiring disassembly, as the operation nut is accessible to the user in the assembled position of the shock absorber and accessing the engine space allows adjusting the stiffness of the shock absorber.

### DESCRIPTION OF THE DRAWINGS

As a complement of the present description and in order to aid a better understanding of the characteristics of the invention, according to an example of a preferred embodiment, a set of drawings is accompanied as an integral part of the description where for purposes of illustration and in a nonlimiting manner the following is shown:

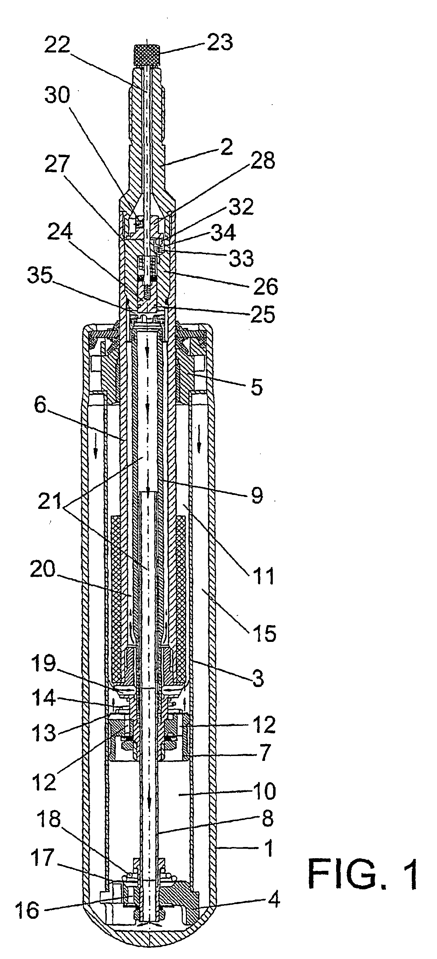

Figure 1. - Shows a longitudinal section representation of the shock absorber according to the object of the present invention, in its extension cycle.

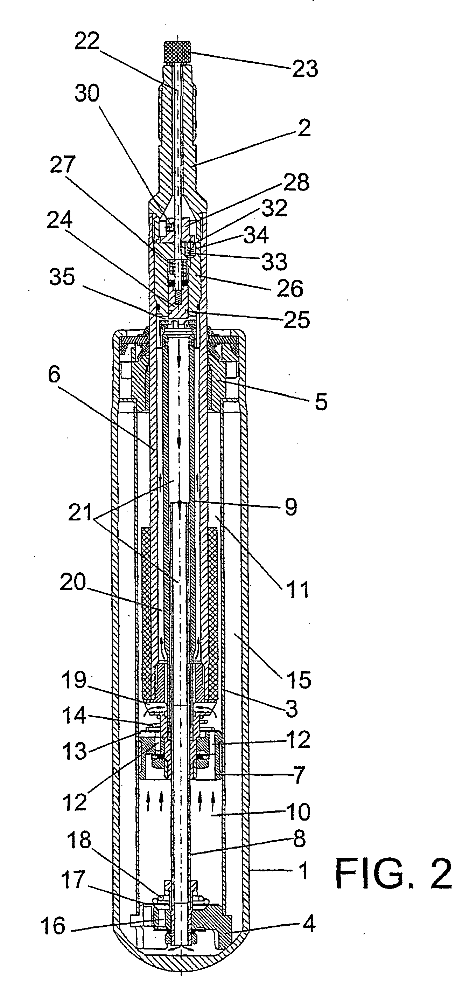

Figure 2. - Shows the same representation of the previous figure in the compression cycle of the shock absorber.

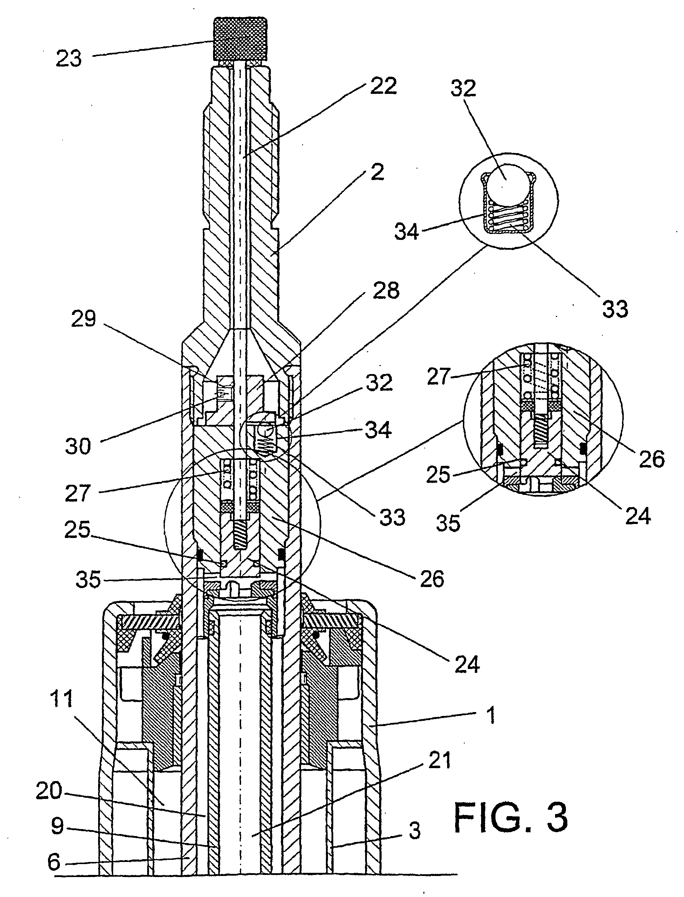

Figure 3. - Shows an enlarged view of the emerging segment of the shock absorber where the mechanical regulation valve is established, with a detailed view showing the position in which said valve practically closes the communication passage between the regulation chamber and the outlet chamber.

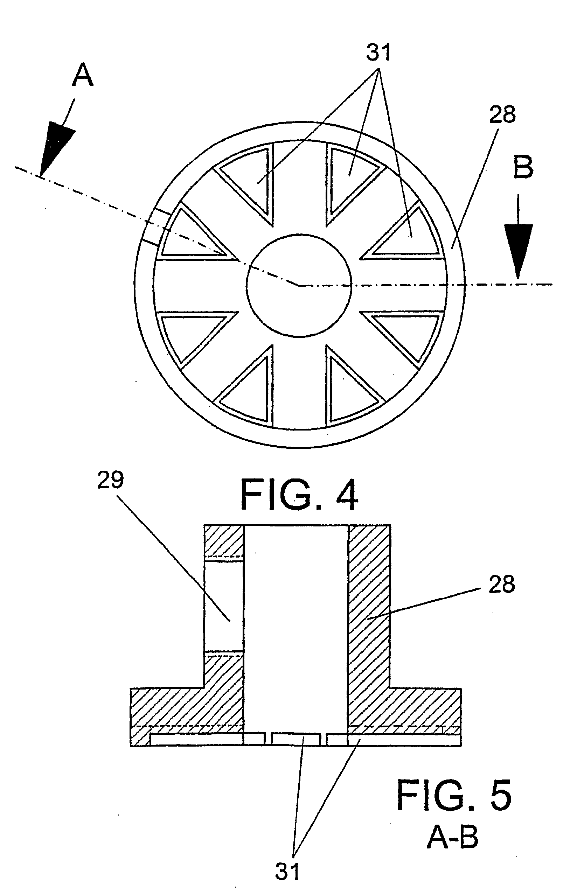

Figure 4. - Shows a bottom plan view of the regulator that complements the valve of the previous figure.
Figure 5. - Shows, finally, a sectional view along the A-B line of the previous figure.

### PREFERRED EMBODIMENT OF THE INVENTION

As shown in the above-described figures, the shock absorber of the invention is of the type comprising a cylindrical external shell (1), attached on one of its ends to the corresponding wheel of a vehicle, while on the other end it is-attached to the body of the vehicle, by means of an element that emerges out of said shell (1), which element corresponds to an assembly shaft (2).

Inside said shell (1) is defined a hollow cylindrical body (3) closed on the bottom by a pressure-relief lower valve (4) and connected at its opposite side to a guide (5) suitably mounted on the top of the shell (1).

Concentric to the hollow cylindrical body (3) there is a sliding cylindrical tubular shaft or outer column (6), part of which projects out of the shell (1). Said outer column (6) is connected to an intermediate piston (7) provided inside the hollow cylindrical body (3) that defines two independent communicating chambers, a lower compression chamber (10) and an expansion chamber (11), with the two chambers communicating by conducts (12) provided in the intermediate piston (7) that are opened and closed by means of a spring valve formed by a plate (13) and a spring (14), said plate being pressed against the top opening of said conducts (12) by the spring (14).

The pressure-relief lower valve (4) is bi-directional and communicates the compression chamber (10) with an annular compensation chamber (15) defined between the shell (1) and the hollow cylindrical body (3), so that said compensation chamber (15) contains a part of hydraulic fluid (oil) and air or gas at a pressure equal to or greater than atmospheric pressure, in order to compensate the variations of the volume of the compression chamber (10) during operation of the shock absorber.

Communication between the compression chamber (10) and the compensation chamber (15) is established by orifices (16) made in the lower valve (4), which are closed by spring valves comprised of a plate (17) and a corresponding spring (18), identical to the pressure valve described above.

With this structure the operation of the shock absorber is as follows:

When the wheel of the vehicle associated to the shock absorber encounters a bump a force is exerted that tends to lift the shell (1) and the hollow cylindrical body (3), reducing the volume of the compression chamber (10) and increasing that of the expansion chamber (11). A pressure difference is thus established between the two chambers that makes the oil flow from the compression chamber (10) to the expansion chamber (11) through the conducts (12). In turn, the pressure differential makes oil flow between the compression chamber (10) and the compensation chamber (15).

When a wheel encounters a hole the shock absorber is extended, so that the compression chamber (10) tends to increase in volume, while the expansion chamber (11) reduces its volume so that oil flows from the latter to the former. In turn, oil passes from the compensation chamber (15) to the compression chamber (10) to compensate the volume increase of the latter.

In addition, the outer column (6) has lateral passages (19) that establish the fluid communication between the expansion chamber (11) and a regulation chamber (20) defined between the outer column (6) and an inner column (9) provided inside it and joined to the intermediate piston (7) at its bottom. Sliding telescopically inside the inner column (9) is another cylindrical tube (8) that is attached to the discharge valve (4) The inner of said cylindrical tube (8) and the inner of the inner column (9) define an axial outlet chamber (21) that is open on its bottom end beneath the lower valve (4) for communication with the compensation chamber (15), while on its top end it communicates with the aforementioned regulation chamber (20) through a radial or communication passage (35). This communication can be adjusted in order to vary the stiffness of the shock absorber without having to disassemble it and without requiring electrically controlled valves installed inside it.

With this purpose, mechanical regulation is established by means of a manually actuated mechanical valve comprised of an axial stem (22) on the emerging segment of the shock absorber body, specifically on the assembly shaft (2) and on the emerging part of the outer column (6). The top of said axial stem (22) ends at a nut or manually operated external control (23), while it is threaded on its bottom and internally onto a body in the form of an upper piston (24) mounted hermetically by means of a gasket (25) inside a bushing (26) that is also hermetically housed inside the top part of the outer column (6). Said upper piston (24) is pushed downwards by a spring (27) placed between it and the bushing (26), which is complemented by a regulator (28) that consists of a cylindrical body having a lateral orifice (29) in which is mounted a screw (30) that attaches said regulator (28) to the axial stem (22).

The aforementioned regulator (28) has on its base several recesses (31) that are opposite a sphere (32) which is constantly pushed towards the base of said regulator (28) by a spring (33) set in a cup (34) that is properly housed in a blind orifice made for such purpose at the top of the bushing (26) in which the upper piston (24) is mounted, so that the regulator (28) rests by its base with the recesses (31) on the top of said bushing (26) in which the upper piston (24) is set.

Operating the upper and external control (23), which the user may access easily and comfortably, causes the upper piston (24) to rise or descend, thereby closing to a greater or lesser extent the communication passage (35) between the regulation chamber (20) and the axial outlet chamber (21), and thus allowing a greater or lesser transference of oil between said chambers, so that the stiffness of the shock absorber is changed. Operating said external control (23) also results in a rotation of the regulator (28) and thus makes the sphere (32) insert in one of the recesses of the regulator, so that a force must be exerted on the external control (23) sufficient to overcome the resistance of the spring (33) and make the sphere (32) insert in the following orifice of the regulator (28) that corresponds to a new regulation position. In this manner the various positions are fixed that the axial stem (22) can occupy, and with it the upper piston (24), so that the various positions of the regulator allow to select in increments the various settings available for the shock absorber stiffness.

## Claims

1. Adjustable shock absorber being applicable to automotive vehicles comprising an outer cylindrical external shell (1) inside which is concentrically mounted a hollow cylindrical body (3) inside which is axially and slidably disposed a cylindrical tubular shaft or outer column (6) having a part that emerges out of the shell (1), for attachment to the vehicle body, with the opposite and inner end of said outer column (6) bearing an intermediate piston (7) externally fitted inside the hollow cylindrical body (3) and internally fitted on a cylindrical tube (8) that is telescopically coupled to an inner column (9), with the bottom end of said cylindrical tube (8) being coupled to a lower valve (4) that closes the bottom end of the hollow cylindrical body (3), wherein the intermediate piston (7) defines two chambers, a bottom compression chamber (10) and an upper expansion chamber (11), with a communication passage existing therebetween, as well as between the compression chamber (10) and a compensation chamber (15) defined between the shell (1) and the hollow cylindrical body (3); with a regulation chamber (20) defined between the outer column (6) and the inner column (9), said regulation chamber (20) being communicated through lateral passages (19) with the expansion chamber (11) and with an axial outlet chamber (21) defined by the inner of the cylindrical tube (8) and the inner of said inner column (9), said outlet chamber (21) ending beneath the lower valve (4), the outer column (6) having an upper part that emerges from the shell (1) to which a shaft (2) is coupled for mounting on the corresponding vehicle body, the shock absorber being provided with means for controlling the flow rate of the fluid from the regulation chamber (20) to the compensation chamber (15), allowing to adjust the stiffness of the shock absorber, **characterized in that** the means for adjusting the stiffness include a manually actuated mechanical valve, which is comprised of an axial stem (22) with an external control (23) at its outer end that can be controlled from outside, while on the other end it is attached to an upper piston (24) that may move upwards and downwards against the resistance of a spring (27) that tends to constantly push the upper piston (24) towards the position for closing a communication passage (35) between the regulation chamber (20) and the axial outlet chamber (21), such that depending on the position occupied by the upper piston (24) the communication passage (35) will be blocked to a greater or lesser extent, allowing a greater or lesser fluid transfer between the regulation chamber (20) and the axial outlet chamber (21), thereby varying the stiffness of the shock absorber by acting on the external control (23).

2. Adjustable shock absorber, according to claim 1, **characterized in that** the upper piston (24) of the mechanical valve is mounted inside a bushing (26) disposed on the emerging part of the outer column (6), such that on the top part of the bushing (26) rests a regulator (28) that allows a graded selection of the various positions of the upper piston (24) and thus the ratings of the shock absorber, with said regulator (28) comprised of a cylindrical body with a lateral orifice (29) in which a screw (30) is provided for attachment of said cylindrical body of the regulator (28) to the axial stem (22), while the base of said cylindrical body of the regulator (28) is provided with recesses (31) in any of which can be housed a sphere (32) that is constantly pushed towards said recesses by a spring (33) disposed inside a cup (34) that is suitably fitted inside a blind orifice of the upper part of the bushing (26), so that actuation of the external control (23) at the end of the axial stem (22) causes the upper piston (24) to rise or descend, thereby closing to greater or lesser extent the communication passage (35) between the regulation chamber (20) and the axial outlet chamber (21), and the simultaneous rotation of the regulator (28) which results in the sphere (32) being positioned in one of the recesses (31), providing a fixed and stable position of the axial stem (22) and the upper piston (24), and thus of the regulation position obtained.

## Patentansprüche

1. Verstellbarer Stossdämpfer, der auf Automobile anwendbar ist und ein äusseres zylindrisches Gehäuse (1) umfasst, in der konzentrisch ein hohler zylindrischer Körper (3) eingebaut ist, in dem axial und verschiebbar eine zylindrische rohrförmige Welle oder äussere Säule (6) vorgesehen ist, von der ein Teil aus dem Gehäuse (1) herausragt, um ihn am Fahrzeugkörper zu befestigen, wobei das gegenüberliegende und innere Ende der besagten äusseren Säule (6) einen mittleren Kolben (7) aufnimmt, dessen Äusseres im Inneren des hohlen zylindrischen Körpers (3) angepasst ist und dessen Inneres auf einem zylindrischen Rohr (8) angepasst ist, das teleskopisch mit einer inneren Säule (9) verbunden ist, wobei das untere Ende des besagten zylindrischen Rohrs (8) mit einem unteren Ventil (4) verbunden ist, das das untere Ende des hohlen zylindrischen Körpers (3) verschliesst und der mittlere Kolben (7) zwei Kammern ausbildet, eine untere Druckkammer (10) und eine obere Dehnungskammer (11) mit einer Verbindung sowohl zwischen diesen als auch zwischen der Druckkammer (10) und einer Ausgleichkammer (15), die zwischen dem Gehäuse (1) und dem hohlen zylindrischen Körper (3) ausgebildet ist; mit einer Regulierungskammer (20) zwischen der äusseren Säule (6) und der inneren Säule (9), wobei die besagte Regulierungskammer (20) mittels seitlichen Durchgängen (19) mit der Dehnungskammer (11) und mit einer axialen Ablasskammer (21) verbunden ist, die durch das Innere des zylindrischen Rohrs (8) und das Innere der besagten inneren Säule (9) definiert ist, wobei besagte Ablasskammer (21) unter dem unteren Ventil (4) endet und die äussere Säule (6) einen oberen Teil hat, der aus dem Gehäuse (1) herausragt und an welchen eine Welle (2) angebracht ist, um an den entsprechenden Fahrzeugkörper angebracht zu werden und der Stossdämpfer mit Mitteln ausgestattet ist, um die Durchflussmenge der Flüssigkeit von der Regulierungskammer (20) in die Ausgleichkammer (15) zu kontrollieren, was erlaubt, die Steifigkeit des Stossdämpfers zu regulieren, **dadurch gekennzeichnet, dass** die Mittel zur Regulierung der Steifigkeit ein per Hand auslösbares mechanisches Ventil umfassen, die einen axialen Schaft (22) beinhalten mit einer externen Kontrolle (23) am äusseren Ende, die von Aussen kontrolliert werden kann, während es auf der anderen Seite an einem oberen Kolben (24) befestigt ist, der nach oben und unten gegen den Widerstand einer Feder (27) bewegt werden kann, die dazu neigt, ständig den oberen Kolben (24) in die Schliessstellung für.eine Verbindung (35) zwischen der Regulierungskammer (20) und der axialen Ablasskammer (21) zu drücken, so dass in Abhängigkeit von Position, die der obere Kolben (24) einnimmt, die Verbindung (35) mehr oder weniger blockiert wird, wodurch ein grösserer oder geringerer Flüssigkeitsübergang zwischen der Regulierungskammer (20) und der axialen Ablasskammer (21) gestattet wird, womit die Steifigkeit des Stossdämpfers durch Einwirkung auf die externe Kontrolle (23) variiert wird.

2. Verstellbarer Stossdämpfer gemäss Anspruch 1, **dadurch gekennzeichnet, dass** der obere Kolben (24) des mechanischen Ventils in einer Buchse (26) angebracht ist, die sich am herrausragenden Teil der äusseren Säule (6) befindet, so dass auf dem oberen Teil der Buchse (26) ein Regulierer (28) agebracht ist, der die abgestufte Wahl der verschiedenen Stellungen des oberen Kolbens (24) gestattet und somit die Einstufung des Stossdämpfers, wobei besagter Regulierer (28) aus einem zylindrischen Körper mit einer seitlichen Öffnung (29) besteht, in der eine Schraube (30) vorgesehen ist, um besagten zylindrischen Körper des Regulierer (28) an dem axialen Schaft (22) zu befestigen, während die Basis des besagte zylindrischen Körpers des Regulierers (28) über Vertiefungen (31) verfügt, die alle eine Kugel (32) aufnehmen können, die ständig gegen besagte Vertiefungen durch eine Feder (33) gedrückt wird, die innerhalb eines Aussenrings (34) vorgesehen ist, der angemessen in eine blinde Öffnung des oberen Teils der Buchse (26) angepasst ist, so dass das Arbeiten der äusseren Kontroll (23) am Ende der axialen Welle (22) dazu führt, dass der obere Kolben (24) sich nach oben oder nach unten bewegt, womit mehr oder weniger die Verbindung (35) zwischen der Regulierungskammer (20) und der axialen Ablasskammer (21) geschlossen wird und die gleichzeitige Drehung des Regulierers (28), die dazu führt, dass die Kugel (32) in eine der Vertiefungen (31) gelangt, wodurch es zu einer festen und stabilen Position der axialen Welle (22) und dem oberen Kolben (24) kommt und somit die Regulierposition erreicht ist.

## Revendications

1. Amortisseur d'énergie ajustable étant applicable aux véhicules automobiles comprenant une coque extérieure cylindrique (1) à l'intérieure de laquelle est monté concentriquement un corps cylindrique creux (3) à l'intérieur duquel est disposé axialement et de manière glissante un arbre tubulaire cylindrique ou une colonne extérieure (6) ayant une partie qui émerge hors de la coque (1), pour la fixation à la carrosserie du véhicule, l'extrémité opposée et intérieure de ladite colonne extérieure (6) portant un piston intermédiaire (7) extérieurement monté à l'intérieur du corps cylindrique creux (3) et intérieurement monté sur un tube cylindrique (8) qui est accouplé télescopiquement à une colonne intérieure (9), l'extrémité inférieure dudit tube cylindrique (8) étant accouplé à une valve inférieure (4) qui ferme l'extrémité inférieure du corps cylindrique creux (3), dans lequel le piston intermédiaire (7) définit deux chambres, une chambre de compression inférieure (10) et une chambre de compression supérieure (11), en existant un passage entre elles, ainsi qu'entre la chambre de compression (10) et une chambre de compensation (15) définie entre la coque (1) et le corps cylindrique creux (3), avec une chambre de régulation (20) définie entre la colonne extérieure (6) et la colonne intérieure (9), ladite chambre de régulation (20) étant communiquée à travers des passages latéraux (19) avec la chambre d'expansion (11) et avec une chambre de sortie axiale (21) définie par l'intérieur du tube cylindrique (8) et l'intérieur de ladite colonne intérieure (9), ladite chambre de sortie (21) terminant sous la valve inférieure (4), la colonne extérieure (6) ayant une partie supérieure qui émerge de la coque (1) à laquelle est accouplé l'arbre (2) pour son montage sur la carrosserie de véhicule correspondante, l'amortisseur d'énergie étant pourvu de moyens pour commander le débit de fluide depuis la chambre de régulation (20) jusqu'à la chambre de compensation (15), en permettant d'ajuster la rigidité de l'amortisseur d'énergie, **caractérisé en ce que** les moyens pour ajuster la rigidité incluent une valve mécanique d'actionnement manuel, qui est constitué d'une tige axiale (22) ayant une commande externe (23) à son extrémité extérieure qui peut être commandée depuis l'extérieur, tandis qu'à l'autre extrémité est fixé un piston supérieur (24) qui peut se déplacer vers le haut et vers le bas à l'encontre de la résistance d'un ressort (27) qui tend à pousser constamment le piston supérieur (24) vers la position de fermeture d'un passage de communication (35) entre la chambre de régulation (20) et la chambre de sortie axiale (21), de manière que selon la position occupée par le piston supérieure (24) le passage de communication (35) se verrouillera dans une mesure plus ou moins grande, en permettant un transfert de fluide plus ou moins grand entre la chambre de régulation (20) et la chambre de sortie axiale (21), en variant par conséquent, la rigidité de l'amortisseur d'énergie en agissant sur la commande externe (23).

2. Amortisseur d'énergie ajustable, selon la revendication 1, **caractérisé en ce que** le piston supérieur (24) de la valve mécanique est monté à l'intérieur d'un coussinet (26) disposé sur la partie émergente de la colonne extérieure (6), de manière que sur la partie supérieure du coussinet (26) repose un régulateur (28) qui permet une sélection graduée de plusieurs positions du piston supérieur (27) et ainsi des puissances nominales de l'amortisseur d'énergie, ledit régulateur comprenant un corps cylindrique avec un orifice latéral (29) dans lequel est pourvue une vis (30) pour la fixation dudit corps cylindrique du régulateur (28) à la tige axiale (22), tandis que la base dudit corps cylindrique du régulateur (28) est pourvue d'évidements (31), en pouvant dans l'un quelconque de ces derniers être logée une sphère (32) qui est constamment poussée vers lesdits évidements par un ressort (33) disposé à l'intérieur d'un godet (34) qui est montée convenablement à l'intérieur d'un orifice borgne de la partie supérieure du coussinet (26), de manière que l'actionnement de la commande externe (23) à l'extrémité de la tige axiale (22) fait que le piston supérieur (24) monte ou descende, en fermant alors dans une mesure plus ou moins grande le passage de communication (35) entre la chambre de régulation (20) et la chambre de sortie axiale (21), et la rotation simultanée du régulateur (28) qui donne comme résultat la sphère (32) positionnée dans un des évidements (31), en fournissant une position fixe et stable de la tige axiale (22) et du piston supérieur (24), et par conséquent de la position de régulation obtenue.
